# EUROPEAN PATENT APPLICATION

(11) **EP 2 860 077 A2**
(43) Date of publication of application: **15.04.2015**
(21) Application number: 14186493.4
(22) Date of filing: 26.09.2014
(51) Int. Cl.: B60W 30/14

(54) **Driving assistance device**

(30) Priority: 30.09.2013 JP 2013203718
(71) Applicant: Toyota Jidosha Kabushiki Kaisha, Toyota-shi, Aichi-ken 471-8571 (JP)
(72) Inventor: Matsumura, Takeshi, Aichi-ken, 471-8571 (JP)
(74) Representative: Intès, Didier Gérard André

(57) **Abstract**

A driving assistance device (1) that performs driving assistance based on a learning vehicle speed, including: a storage portion (20, 41) that stores vehicle speeds in relation to each location on a travel route for multiple times using a vehicle speed acquired when a driver performs accelerating and decelerating operations to make a vehicle travel, a first leaning portion (42) that learns a first learning vehicle speed at a location where the dispersion of a plurality of vehicle speeds is less than a threshold value when the location exists, a second learning portion (43) that learns a second learning vehicle speed at a location within a set range before the learned location, and a travel control portion (30, 31, 45) that performs travel control based on a current location of the travelling vehicle, the first learning vehicle speed and the second learning vehicle speed.

## Description

### 1. Field of the Invention

The present disclosure relates to a driving assistance device that learns travel data during a time in which a driver performs driving operations to make a vehicle travel, and performs driving assistance based on a learned result.

### 2. Description of Related Art

Various devices for assisting a driver of a vehicle have been developed, and there is a device that performs driving assistance of travel control etc., so that the vehicle speed becomes a target vehicle speed. In some cases, as the target vehicle speed, vehicle speed data is stored during a time in which the driver performs driving operations to make the vehicle travel, and the vehicle speed data is learned to set the target vehicle speed. As driving assistance using the vehicle speed data generated by the driver's driving operations, for example, Japanese Patent Application Publication No. 2010-89698 (JP 2010-89698 A) has disclosed the following automatic driving system: a vehicle's vehicle speed at each location is stored during a time in which the driver performs driving operations to make the vehicle travel, and a vehicle speed stored when the vehicle is traveling under auto-driving is used as a target value of vehicle speed at each location to control the vehicle. Further, for example, Japanese Patent Application Publication No. 2011-161949 (JP 2011-161949 A) has disclosed the following drive control device: the number of learning times and a dispersion of the vehicle speeds (learning data) at each location (i.e., node) which defines the shape of a road are acquired, and a confidence is obtained based on the number of learning times and the dispersion (the confidence is higher when the number of learning times is larger, and when the dispersion is smaller), the higher the confidence (reliability), the higher the degree of applying the learning vehicle speed for the travel control.

Incidentally, the above-mentioned drive control device of related art controls the accelerating and decelerating of a vehicle before arriving at the node, so that the vehicle becomes the vehicle speed while arriving at the node where the vehicle speed is learned. However, the accelerating and decelerating before arriving at the node is not learned, there is a possibility to bring the driver a uncomfortable feeling. On the other hand, in order to perform travel control with a small uncomfortable feeling to the driver, if vehicle speeds concerning all the locations on the travel route of the vehicle are learned, the amount of vehicle speed data to be learned would be huge.

### SUMMARY OF THE INVENTION

The invention provides a driving assistance device that suppresses the amount of vehicle speed data to be learned, and that reduces the uncomfortable feeling that the travel control, which is performed based on the vehicle speeds learned by the vehicle speed data, brings to the driver.

A first aspect of the invention provides a driving assistance device that learns travel data during a time in which a driver performs driving operations to make a vehicle travel, and performs driving assistance based on a learned result. The driving assistance device including: a storage portion that stores vehicle speeds in relation to each location on a travel route for multiple times by using a vehicle speed acquired when the driver performs accelerating and decelerating operations to make the vehicle travel; a first learning portion that learns a first learning vehicle speed at a location where a dispersion of a plurality of vehicle speeds is less than a threshold value based on the plurality of vehicle speeds at the location, when the location where the dispersion of the plurality of vehicle speeds is less than a threshold value exists among locations stored in the storage portion; a second learning portion that learns a second learning vehicle speed or learning acceleration and deceleration at a location within a set range before the location learned by the first learning portion stored in the storage portion based on a plurality of vehicle speeds at the location within the set range or a plurality of accelerations and decelerations acquired respectively from changes of the plurality of vehicle speeds; a location acquisition portion that acquires a current location of the vehicle; and a travel control portion that performs travel control based on the current location of the vehicle acquired by the location acquisition portion, the first learning vehicle speed, and one of the second learning vehicle speed and the learning acceleration and deceleration.

According to the above aspect, when the travel control portion is used to perform the travel control for the vehicle speed to become the first learning vehicle speed at the location learned by the first learning portion, the driving assistance device performs the travel control by considering the second learning vehicle speed or the learning acceleration and deceleration at the location learned by the second learning portion. When the travel control is performed so that the vehicle speed becomes the first learning vehicle speed at the location where the dispersion of the vehicle speeds caused by the driver's accelerating and decelerating operations is a threshold value or below, the second learning vehicle speed or the learning acceleration and deceleration at a location within the set range before the location is used, thus, the second learning vehicle speed or the learning acceleration and deceleration at the location within the set range is also learned from the vehicle speeds or the acceleration and deceleration caused by the driver's accelerating and decelerating operations; therefore, the acceleration and deceleration caused by the travel control can be closer to the acceleration and deceleration caused by the driver's accelerating and decelerating operations. Thus, the driving assistance device also learns the second learning vehicle speed or the learning acceleration and deceleration at the location within the set range before the location learned by the first learning portion, and performs the travel control by considering the second learning vehicle speed or the learning acceleration and deceleration at the location within the set range, so that comparing with a case in which all the locations on the travel route are learned, the amount of vehicle speed data to be learned can be suppressed. Therefore, the driving assistance device can suppress the amount of vehicle speed data to be learned, and reduce the uncomfortable feeling that is brought to the driver by the travel control based on the vehicle speed learned by using the vehicle speed data.

In the above described aspect, it may also be configured that the second learning portion learns the second learning vehicle speed or the learning acceleration and deceleration at a location in a given distance before the location learned by the first learning portion. According to this configuration, the second learning vehicle speed or the learning acceleration and deceleration at the location which is before a given distance from the learning location learned by the first learning portion is learned, thus, a separate process for determining the location learned by the second learning portion is not necessary, and the process load of the second learning portion can be reduced.

In the above described aspect, it may also be configured that the second learning portion learns the second learning vehicle speed or the learning acceleration and deceleration at a location having a minimum dispersion of a plurality of vehicle speeds or a plurality of accelerations and decelerations within the set range. According to this configuration, the second learning vehicle speed or the learning acceleration and deceleration at the location within the set range before the first learning location learned by the first learning portion and has a minimum dispersion of the plurality of vehicle speeds or the plurality of accelerations and decelerations, is learned, thus, the vehicle speeds or the acceleration and deceleration caused by the driver's accelerating and decelerating operations are stable when the dispersion of the vehicle speeds or the acceleration and deceleration is small; therefore, learning value based on data of high reliability after learning can be acquired.

In the above described aspect, the set range may be maximally shorter than a range till a previous learning location learned by the first learning portion last time. According to this configuration, by setting such a range as the set range, a location that is on the side of the location learned by the first learning portion this time relative to the previous location learned by the first learning portion last time can be learned by the second learning portion.

According to an aspect of the present disclosure, the amount of vehicle speed data to be learned can be suppressed, and the uncomfortable feeling that is brought to the driver by the travel control, which is performed based on the vehicle speeds learned by using the vehicle speed data, can be reduced.

### BRIEF DESCRIPTION OF THE DRAWINGS

Features, advantages, and technical and industrial significance of exemplary embodiments of the disclosure will be described below with reference to the accompanying drawings, in which like numerals denote like elements, and wherein:
FIG. 1 is a configuration diagram illustrating the driving assistance device in accordance with the embodiment;
FIG. 2 is an example of the vehicle speed change caused by the travel control and the learning object data when the second learning portion of FIG. 1 learns the vehicle speed and the travel control portion performs travel control by considering the learned vehicle speed;
FIG. 3 is an example of the vehicle speed change caused by the travel control and the learning object data when the second learning portion of FIG. 1 learns the acceleration and deceleration and the travel control portion performs travel control by considering the learned acceleration and deceleration;
FIG. 4 is an example of the vehicle speed change caused by the travel control and the learning object data when the driving assistance device learns the vehicle speed and performs travel control with the learned vehicle speed;
FIG. 5 is a flowchart illustrating the flow of the actions while learning in the driving assistance device of FIG. 1;
FIG. 6 is a flowchart illustrating the flow of the actions under travel control in the driving assistance device of FIG. 1.

### DETAILED DESCRIPTION OF EMBODIMENTS

Hereinafter, an embodiment of the driving assistance device of the present disclosure will be described with reference to the accompanying drawings. It should be noted that the same or equivalent elements in the drawings are denoted by the same reference numerals, and their repeated explanation is omitted.

The driving assistance device of the embodiment learns a driver's driving operations, sets a learning vehicle speed which becomes a target of the travel control at each location on a travel route, and performs travel control and provides information by using the learning vehicle speed. The driving assistance device of the present embodiment performs driving assistance when being instructed by the driver. However, even if the vehicle is under the travel control, when the driver performs the accelerating and decelerating operations, this operation is prioritized.

Also, as for the locations where the learning vehicle speed is not set, the vehicle speed learned by other vehicles may be acquired from many other vehicles via vehicle-to-vehicle communication etc., its median value, average value etc. may be set as the learning vehicle speed, or the learning vehicle speed may also be set according to the speed limit on the traveling road. The target speed is set at each location with a given distance interval (e.g., 100 m, 200 m), an accelerating control region, a decelerating control region or the like is set on the side before that location, so as to become the target speed at that location. The learning location may not only be exactly the same location; but also includes a location within a predetermined range relative to the exactly same location in the front-rear direction (e.g., a location several meters away in the front-rear direction) and the left-right direction (e.g., a location at a different lane). The predetermined range is set by considering the detecting error of the unit which detects the location of the vehicle, etc.

Incidentally, on an expressway, and a toll way etc., the driving assistance can be performed for maintaining a predetermined vehicle speed or a fixed target vehicle speed. But on an ordinary road etc., under the situation where the vehicle speed of the vehicle frequently changes due to various reasons, such as the speed limit on each road, the surrounding environment such as the traffic light, the change of the traffic volume etc., it is necessary that the target vehicle speed changes correspondingly, and if the target vehicle speed is not set suitably for each location, the convenience of the driving will be impacted. The driving assistance device of the present embodiment can perform learning and set the target vehicle speed at each location on the travel route, thus, is appropriate on such an ordinary road etc. where the vehicle speed frequently changes.

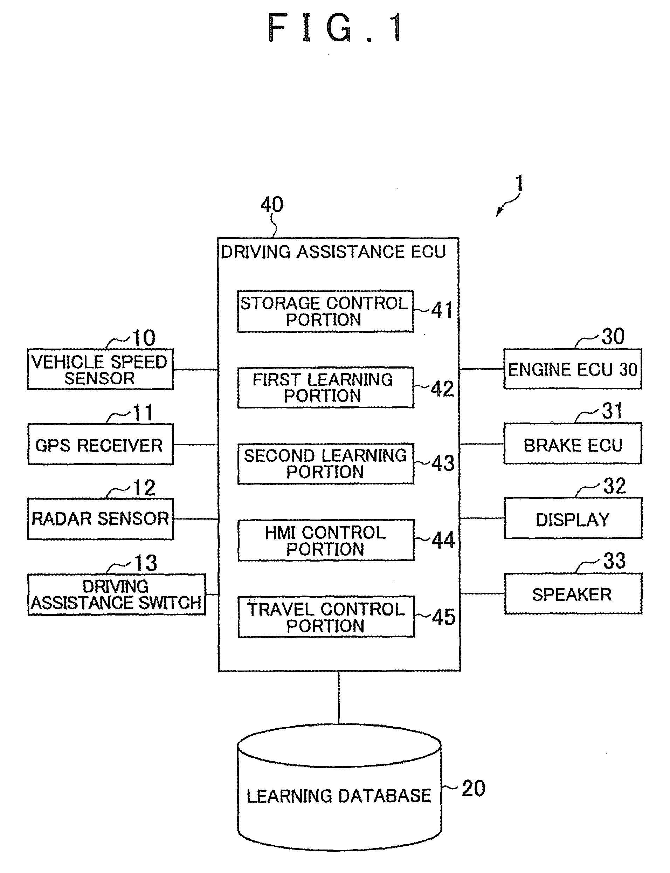

The configuration of the driving assistance device 1 of the embodiment is described with reference to FIG. 1. FIG. 1 is a configuration diagram illustrating the driving assistance device 1 in accordance with the present embodiment.

The driving assistance device 1 performs driving assistance, so as to accelerate and/or decelerate based on the driver's preference. Therefore, when the vehicle is traveling due to the driver's accelerating and decelerating operations, the driving assistance device 1 learns the position (position with a small dispersion of the vehicle speeds) where the behaviors are stable at the same location, and learns the vehicle speed or the acceleration and deceleration at a location before the learning location. Further, when the driving assistance device 1 performs travel control in order to become the vehicle speed learned at the position with a small dispersion of the vehicle speeds, the travel control is performed by also considering the vehicle speed or the acceleration and deceleration learned at the location before the above position.

The driving assistance device 1 includes: a vehicle speed sensor 10, a GPS

(Global Positioning System) receiver 11, a radar sensor 12, a driving assistance switch 13, a learning database 20, an engine ECU (Electronic Control Unit) 30, a brake ECU 31, a display 32, a speaker 33, a driving assistance ECU 40 (a storage control portion 41, a first learning portion 42, a second learning portion 43, HMI (Human Machine Interface) control portion 44, a travel control portion 45) etc.

Also, in the present embodiment, the GPS receiver 11 functions as the location acquisition portion of the claims; the learning database 20 and the storage control portion 41 of the driving assistance ECU 40 function as the storage portion of the claims; the first learning portion 42 of the driving assistance ECU 40 functions as the first learning portion of the claims; the second learning portion 43 of the driving assistance ECU 40 functions as the second learning portion of the claims; the engine ECU 30, the brake ECU 31 and the travel control portion 45 of the driving assistance ECU 40 function as the travel control portion of the claims.

In the present embodiment, the location learned by the first learning portion 42 is referred to as the first learning location; the vehicle speed learned by the first learning portion 42 is referred to as the first learning vehicle speed. Further, in the present embodiment, the location learned by the second learning portion 43 is referred to as the second learning location, the vehicle speed or the acceleration and deceleration learned by the second learning portion 43 are referred to as the second learning vehicle speed and the learning acceleration and deceleration respectively.

The vehicle speed sensor 10 is a sensor for detecting the speed of the vehicle. The vehicle speed sensor 10 detects the vehicle speed, and sends the detected vehicle speed to the driving assistance ECU 40 as a vehicle speed signal. Also, as the sensor that detects the vehicle speed, for example, there is a wheel speed sensor which detects the rotation speed of each wheel (pulse number corresponding to the wheel rotation), which calculates the wheel speed from the rotation pulse number of each wheel respectively, and calculates the vehicle body speed (vehicle speed) from the wheel speed of each wheel.

The GPS receiver 11 includes a GPS antenna, a processing device etc. The GPS receiver 11 receives a GPS signal from each GPS satellite with the GPS antenna. And the GPS receiver 11 demodulates each GPS signal with the processing device, and calculates the current location of the vehicle (latitude, longitude) etc. based on each of the demodulated GPS information. And, the GPS receiver 11 outputs the information about the current location of the vehicle etc. to the driving assistance ECU 40 as a current location signal. Also, when the vehicle is mounted with a navigation device, it may be configured that the information of the current location is provided from the navigation device.

The radar sensor 12 is a radar for detecting an object in front of the vehicle (specifically a preceding vehicle), using electromagnetic wave such as millimeter wave, laser light etc. The radar sensor 12 scans while sending electromagnetic waves in front of the vehicle in the left-right direction, and receives reflecting waves which are reflected back. And, when the reflecting waves cannot be received, the radar sensor 12 determines that the preceding vehicle is absent; when the reflecting waves can be received, the radar sensor 12 calculates the relative distance to the preceding vehicle, the relative speed and the relative direction (lateral location) etc., using the information (scanning azimuth angle in the left-right direction, the sending time, the receiving time, reflection strength, etc.) about each reflection point (each detection point) where the reflecting waves can be received. And, the radar sensor 12 sends the absence-presence of the preceding vehicle, the various information calculated when the preceding vehicle is present to the driving assistance ECU 40 as a radar detection signal. Also, as the unit to detect the preceding vehicle, a camera, and other units using an vehicle-to-vehicle communication device may also be used.

The driving assistance switch 13 is a switch used for starting/ending the travel control performed by the driving assistance device 1. The driving assistance switch 13 is an ON/OFF switch, and switches ON/OFF to the accelerating control and ON/OFF to the decelerating control. The driving assistance switch 13 is, for example, a hardware switch provided on the center console or the steering wheel of the vehicle, which may input ON/OFF by a pressing operation of the driver; or a switch displayed on a vehicle mounted display, which may input ON/OFF by the driver touching the display. The driving assistance switch 13 sends the ON/OFF state of each control which is input by the driver of the vehicle to the driving assistance ECU 40 as a switch signal.

Also, as the unit for starting the travel control performed by the driving assistance device 1, the operation to an acceleration pedal or a brake pedal may be used, for example, the operation to start the accelerating control includes stepping down the acceleration pedal gently, releasing the brake pedal; the operation to start the decelerating control includes stepping down the brake pedal gently, releasing the acceleration pedal. When the travel control is started/ended by such a pedal operation, it is not necessary to provide the driving assistance switch 13 separately. The operation of stepping down the acceleration pedal gently is, for example, an operation in which the detection value of the accelerator opening of the acceleration pedal changes from 0 to a value exceeding a threshold value (for example, the minimum value that is detectable by the sensor). The operation of releasing the acceleration pedal is, for example, an operation in which the detection value of the accelerator opening of the acceleration pedal changes from the predetermined value to 0. The operation of stepping down the brake pedal gently is, for example, an operation in which the detection value of the stepping amount of the brake pedal changes from 0 to a value exceeding a threshold value (for example, the minimum value that is detectable by the sensor). The operation of releasing the brake pedal is, for example, an operation in which the detection value of the stepping amount of the brake pedal changes from the predetermined value to 0.

The learning database 20 is a database that stores data related to the learning of the driving assistance device 1. The learning database 20 is configured in a predetermined area of a writable/readable storage device, such as a hard disk. Learning data and learned data are stored in the learning database 20. Learning data is data used for learning, which is collected with a predetermined sampling period. Learning data includes travel times, the vehicle speed etc. associated with each location in the predetermined sampling period. And, when the acceleration and deceleration (vector) is also learned, the learning data also includes the acceleration and deceleration. The sampling period may be a period of travel distance, or a period of time. Learned data is data which is learned, and is data of each learning location. Learned data includes the first learning vehicle speed associated with the first learning location, the second learning location and the second learning vehicle speed or the learning acceleration and deceleration associated with each second learning location. Also the learning database 20 may be configured in the driving assistance ECU 40. Also, when the acceleration and deceleration is learned, at least the vehicle speed is stored in association with the detection time, in order to obtain the acceleration and deceleration.

The engine ECU 30 is an ECU that controls the engine (hence, the driving force). The engine ECU 30 calculates a requested driving force (target acceleration) based on the operation of the acceleration pedal performed by the driver. And, the engine ECU 30 controls the suction air amount, the fuel injection amount, and ignition of the engine etc., in order to become the target acceleration. Specifically, if an engine control signal is received from the driving assistance ECU 40, the engine ECU 30 performs control for becoming the target acceleration shown by the engine control signal.

The brake ECU 31 is an ECU to control the brake (hence, the braking force) of each wheel. The brake ECU 31 calculates a requested braking force (a target deceleration) based on the operation of the brake pedal performed by the driver. And, the brake ECU 31 controls the brake hydraulic pressure of the wheel cylinder of each wheel, in order to become the target deceleration. Specifically, if a brake control signal is received from the driving assistance ECU 40, the brake ECU 31 performs control for becoming the target deceleration shown by the brake control signal.

The display 32 is a display for providing information through the display of the HMI of the driving assistance device 1. The display 32 is a display shared with other vehicle mounted devices, such as a HUD (head-up display), a display of the navigation device, and a display in the combination meter. If a display control signal is received from the driving assistance ECU 40, the display 32 displays an image based on the display control signal.

The speaker 33 is a speaker for providing information through sound of the HMI of the driving assistance device 1. The speaker 33 is a speaker shared with other vehicle mounted devices. If a sound control signal is received from the driving assistance ECU 40, the speaker 33 outputs sound based on the sound control signal.

The driving assistance ECU 40 includes CPU (central processing unit), ROM (read only memory), and RAM (random access memory) etc., and is an electronic control unit that controls the driving assistance device 1 comprehensively. The driving assistance ECU 40 constitutes the storage control portion 41, the first learning portion 42, the second learning portion 43, the HMI control portion 44, and the travel control portion 45, by loading an application program stored in the ROM into the RAM, and executing the application program by the CPU. The driving assistance ECU 40 receives each signal from the vehicle speed sensor 10, the GPS receiver 11, the radar sensor 12 and the driving assistance switch 13. At this time, the driving assistance ECU 40 associates the time when the signal is received with information of the vehicle speed etc. obtained from each signal, if necessary. Also, the driving assistance ECU 40 performs the process of each portion 41, 42, 43, 44, 45 based on the information of each signal, and sends each control signal to the engine ECU 30, the brake ECU 31, the display 32 and the speaker 33, if necessary.

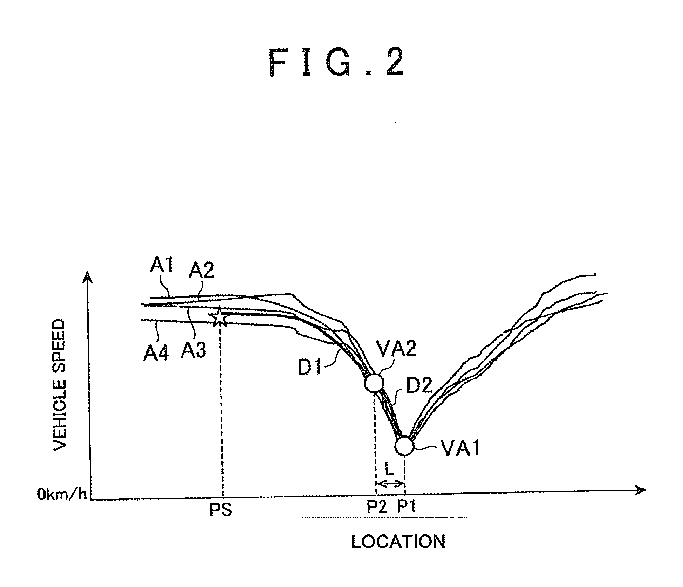

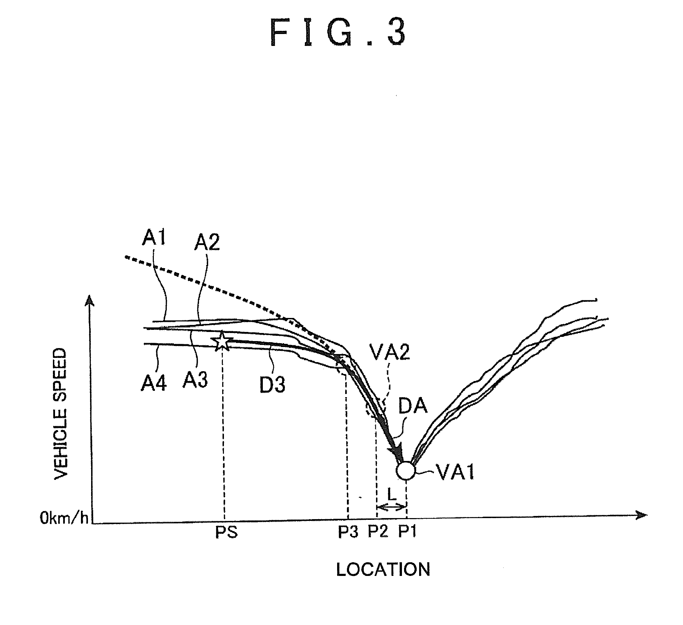

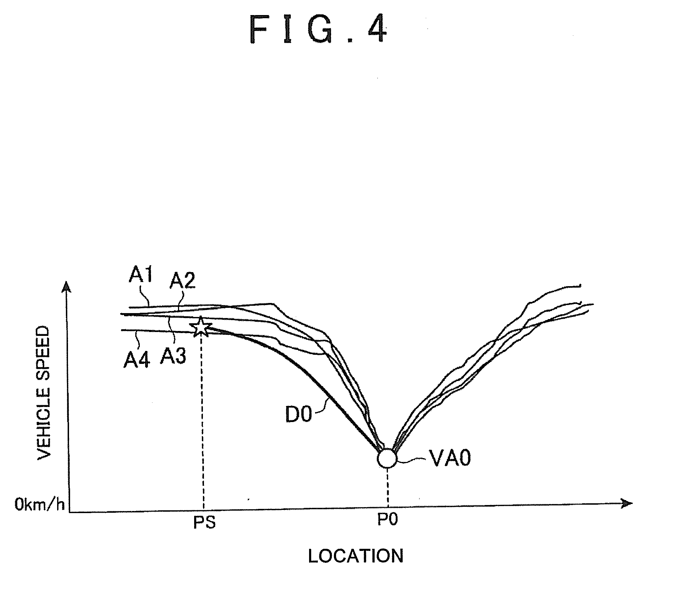

The process of each portion 41, 42, 43, 44, 45 of the driving assistance ECU 40 is described with reference to FIGS. 2, 3, 4. FIG. 2 is an example of the vehicle speed change caused by the travel control and the data of the learning object data when the second learning portion 43 learns the vehicle speed and the travel control portion 45 performs travel control by considering the learned vehicle speed. FIG. 3 is an example of the vehicle speed change caused by the travel control and the learning object data when the second learning portion 43 learns the acceleration and deceleration and the travel control portion 45 performs travel control by considering the learned acceleration and deceleration. FIG. 4 is an example of the vehicle speed change caused by the travel control and the learning object data when the driving assistance device learns the vehicle speed and performs travel control using the learned vehicle speed. In FIGS. 2-4, the horizontal axis shows the location (specifically the location of the vehicle in the front-rear direction, equivalent to the travel distance), while the vertical axis shows the vehicle speed; the solid lines A1, A2, A3, A4 illustrated in FIGS. 2-4 illustrate the vehicle speed data (the data of the learning object) consisting of the vehicle speed at each location respectively when the vehicle is traveling on the same travel route under the driver's accelerating and decelerating operation, the vehicle speed data shows that the vehicle decelerates until a predetermined position and accelerates from the predetermined position.

The process of the storage control portion 41 is described. When the travel data under the driver's driving operation is collected and stored for the learning, if the information of all the locations on the travel route is stored for the learning, a huge storage capacity is needed. However, the storage capacity of the learning database 20 is limited, thus, considering the storage capacity, information is stored at each location with a predetermined sampling period while the learning is performed and the learning result is stored at a predetermined location interval, thus, the amount of the stored data is suppressed.

The storage control portion 41 only stores that "the route has been traveled on" when it is determined that the location is on a route (road) where the vehicle is traveling for the first time under the driver's driving operations by comparing all the locations stored in the learning database 20 with the current traveling location. In such a case, the storage control portion 41 only stores each location of the route in the learning database 20, without storing the data other than position, such as the vehicle speed. The storage control portion 41 stores the travel data with a predetermined sampling period when it is determined that it is a route on which the vehicle has traveled before by the same comparison as described above. The data of vehicle speed is also included in the travel data. In such a case, regarding the same location on the route, the storage control portion 41 stores the vehicle speed, the number of travel times or the like corresponding to each location in the learning database 20, and stores the vehicle speed and acceleration and deceleration associated with time when the acceleration and deceleration is also learned. The sampling period is set in view of the storage capacity of the learning database20, for example with an interval of meters or tens of meters.

The process of the first learning portion 42 is described. The first learning portion 42 learns the location where the driver's driving actions are stable and the vehicle speeds at the location, from the vehicle speed data caused by the driver's driving operations. The first learning portion 42 sets the vehicle speed as the target vehicle speed of the control target, that is, the first learning vehicle speed, for example, automatically before (e.g., within 100 m) the location where the driver's driving actions are stable. Thus, the target vehicle speed can be set at a predetermined interval and can also correspond to an ordinary road or the like where the vehicle speed changes frequently. The location where the driver's driving actions are stable represents a location where the dispersion of the vehicle speeds at the same location for travelling several travel times is small (for example, the variance of the vehicle speeds is a threshold value or below). The same location does not need to be the same location; if the variance of the vehicle speeds within a given range (e.g., within several meters) in the front-rear direction or in the left-right direction is a threshold value or below, the location is regarded as a location where the driving actions are stable. The description is on the premise of a plurality of travel times, however, the learning is not performed when the number of travel times is a given number or below, so that the reliability of the learning result can be ensured.

The first learning portion 42 determines whether the number of travel times (the pieces of data) of all the vehicle speed data included in the location is a given number or below, at each location stored in the learning database 20. The given number for the determination is a sufficient number needed for the learning and is preset. When the number of travel times is less than the given number, the first learning portion 42 does not perform learning at the location.

When the number of travel times is the given number or above, the first learning portion 42 calculates the variance of a plurality of vehicle speed data associated with each location, and determines whether the variance of the vehicle speeds is a threshold value or above. The sampling variance is used, for example, as the variance. The threshold value for the determination is a threshold value which is used for determining whether the vehicle speeds under the driver's driving actions are stable, and is preset according to experiments and simulations. Also, the threshold value may be changed according to the average value and median value of the plurality of vehicle speeds at the location. When the variance of the vehicle speeds is a threshold value or above, since the vehicle speed data is not stable, the first learning portion 42 does not set a first learning vehicle speed.

When the variance of the vehicle speeds is less than the threshold value, the first learning portion 42 sets a first learning vehicle speed using the plurality of vehicle speed data, and stores the first learning vehicle speed associated with the learned location (the first learning location) in the learning database 20. As for the first learning vehicle speed, for example, the average value and the median value of the plurality of vehicle speed data may be used as the learning vehicle speed; or the minimum value or the 20th percentile value (that is, the vehicle speed value equivalent to 20% of the low side of all the vehicle speed data) may also be used as the learning vehicle speed for safety. Further, the learning vehicle speed may also be set by matching with the characteristic of the driver or the performance of the vehicle. For example, if the driver drives at a high average vehicle speed, then the maximum value may be used as the learning vehicle speed. In the case of the examples illustrated in FIGS. 2, 3, with regard to the 4 vehicle speed data A1, A2, A3, A4, the variance of the vehicle speed at the location P1 (the location where the decelerating ends and the accelerating starts) is less than the threshold value, a first learning vehicle speed VA1 is set at the first learning location P1.

The process of the second learning portion 43 is described. When the vehicle speed is learned by the first learning portion 42 at the first learning location (the location where the variance of the vehicle speeds is less than the threshold value) where the driver's driving actions are stable, the vehicle speed or the acceleration and deceleration is learned from the vehicle speed data caused by the driver's driving operations at a location within the set range before the first learning location. Thus, when the travel control is performed so that the vehicle speed becomes the first learning vehicle speed (the target vehicle speed) at the first learning location of the first learning portion 42, the travel control can be performed by considering the vehicle speed or acceleration and deceleration learned at the location before the first learning location (the second learning location), so that the accelerating and decelerating based on the travel control can be close to the accelerating and decelerating based on the driver's accelerating and decelerating operations. Here, the following cases are described: a case in which the vehicle speed is learned at a location before a given distance from the first learning location learned by the first learning portion 42; a case in which the vehicle speed is learned at a location within a set range before the first learning location learned by the first learning portion 42 and with the minimum dispersion of the vehicles; and a case in which the average acceleration and deceleration is learned within the set range before the first learning location learned by the first learning portion 42. Also, the set range is a range set before the first learning location learned by the first learning portion 42 when the second learning portion 43 performs the learning. In order for the first learning portion 42 to learn the location which is at the side of the first learning location learned by the first learning portion 42 this time relative to the previous first learning location learned by the first learning portion 42 last time, a maximal range of the set range is a range shorter than the range till the previous first learning location learned by the first learning portion 42 last time. Considering the road conditions (straight route, curved route etc.), traffic conditions, the variance value of a plurality of vehicle speeds at the first learning location learned by the first learning portion 42, the set range may be set properly narrower than the above maximum range. If a previous first learning location learned by the first learning portion 42 last time is absent, the set range may be set as a given range or the like.

The case is described in which the vehicle speed is learned at a location before a given distance. When the first learning vehicle speed is set by the first learning portion 42, the second learning portion 43 acquires the first learning location learned by the first learning portion 42, and extracts a plurality of vehicle speed data associated with a location in a given distance before the first learning location (the second learning location) from the learning database 20. The given distance is a distance within the set range and is set by considering the intervals of the location setting the first learning location that becomes the control target, for example, 5 m, 10 m, 15 m, 20 m. Further, the second learning portion 43 uses the extracted plurality of vehicle speed data to set the second learning vehicle speed, and stores the second learning vehicle speed and the second learning location associated with the first learning location in the learning database 20. The average value, median value, minimum value and maximum value, the 20th percentile value etc. of a plurality of vehicle speed data can be used as the second learning vehicle speed, just like the first learning vehicle speed. In the case of the example illustrated in FIG.2, a second learning vehicle speed VA2 is set at the second learning location P2 in a given distance L before the first learning location P1.

The case in which the vehicle speed is learned at a location with the minimum dispersion of the vehicle speeds is described. When the first learning vehicle speed is set by the first learning portion 42, the second learning portion 43 acquires the first learning location of the first learning portion 42, and extracts the vehicle speed data associated with each location within the set range before the first learning location respectively from the learning database 20. The set range in such a case is set by considering the intervals of the location setting the first learning vehicle speed, for example, a range of 10 m to 20 m, or a range of 5 m to 15 m, or a range of 5 m to 20 m before the first learning location. The second learning portion 43 also calculates the variance of the extracted plurality of vehicle speed data at each location respectively. Then, the second learning portion 43 compares the calculated variances at each location, and extracts the location (the second learning location) with the minimum variance. Then, the second learning portion 43 uses a plurality of vehicle speed data of the selected location, sets the second learning vehicle speed as mentioned above, and stores the second learning vehicle speed and the second learning location associated with the first learning location in the learning database 20.

The case of learning the average acceleration and deceleration is described. When the first learning vehicle speed is set by the first learning portion 42, the second learning portion 43 sets the vehicle speed at the location (the second learning location) in a given distance before the first learning location as described above. Then, the second learning portion 43 uses the set vehicle speed, the first learning vehicle speed learned by the first learning portion 42, and the distance between the first learning location and the second learning location to calculate average acceleration and deceleration (average acceleration or average deceleration) between the first learning location and the second learning location, sets the average acceleration and deceleration as the learning acceleration and deceleration (the learning acceleration or the learning deceleration) and stores the learning acceleration and deceleration and the second learning location associated with the first learning location in the learning database 20. The learning acceleration and deceleration is a quadratic curve. In the case of the example illustrated in FIG. 3, a vehicle speed VA2 is set at the second learning location P2 before a given distance L from the first learning location P1, and learning deceleration DA is set using the vehicle speed VA2, the first learning vehicle speed VA1 at the first learning location P1 and the distance L. Also, the methods other than the above-described method can also be applied to set the learning acceleration and deceleration, for example, the average value, median value, minimum value, maximum value and the 20th percentile value etc. of a plurality of the acceleration and deceleration data associated with the location before a given distance from the first learning location may be used as the learning acceleration and deceleration; alternatively, the learning acceleration and deceleration may be set by extracting the acceleration and deceleration data associated with each location within a given range before the first learning location respectively; calculating the variance of the plurality of accelerations and decelerations data at each location respectively; comparing the calculated variance of each location; and using a plurality of accelerations and decelerations data of the location (the second learning location) with a minimum variance.

The process of the HMI control portion 44 is described. The vehicle speed that becomes the target of the travel control at each travelling location of the driving assistance device 1 is not a given vehicle speed, but changes frequently. Thus, as a HMI, the driving assistance device 1 provides information such as the travel range of the travel control, the target vehicle speed of the travel control and the content of the travel control to the driver.

Every time when a current location of the vehicle is acquired, the HMI control portion 44 extracts the first learning location and the first learning vehicle speed as well as the second learning location and one of the second learning vehicle speed and the learning acceleration and deceleration from the learning database 20 when a first learning location is present within a predetermined range (e.g. within 100 m) from the current location on the current traveling route (road) of the vehicle. The first learning vehicle speed becomes the target vehicle speed. When the first learning location is absent within the predetermined range, the speed limit on the current travelling road, and the target vehicle speed set according to the learning result of other vehicle are extracted. Alternatively, in an unset area, the driving assistance may not be performed. In such a case, the driver will be informed of the fact by the HMI.

In the case in which the target vehicle speed or the like is extracted, the HMI control portion 44 generates image information for displaying the current target vehicle speed (the first learning vehicle speed), each area under the acceleration and decelerating control, the current performing control (under the accelerating control, under the decelerating control etc.), the current location or the like, and sends a display control signal consisting of the image information to the display 32. At this time, the areas can be differentiated by colors according to the control so that it is easy to recognize the area is under which kind of control. Also, the HMI control portion 44 generates sound information for outputting the current target vehicle speed (the first learning vehicle speed), each area under the acceleration and decelerating control, the current performing control (under the accelerating control, under the decelerating control etc.) or the like in sound, and sends a sound control signal consisting of the sound information to the speaker 33. By performing such a HMI, the driver can select the target vehicle speed or control that is suitable for the status of the surrounding environments. Also, the driver may also be informed of the second learning vehicle speed or the learning acceleration and deceleration or the like by the HMI.

With such a HMI, the driver recognizes the target vehicle speed and each control area, thus, when it is necessary to perform travel control until becoming the target vehicle speed at each area, the driver presents the intention of the accelerating control or the decelerating control. As for the method for presenting the intention, the switching-on operation to the accelerating control or the decelerating control is performed using the driving assistance switch 13; alternatively, when such a switch is absent, the switching-off operation is performed by stepping down the acceleration pedal gently or releasing the brake pedal under the accelerating control, and by stepping down the brake pedal gently or releasing the acceleration pedal under the decelerating control. The process of the travel control portion 45 is performed according to these operations.

The process of the travel control portion 45 is described. As for the basic travel control, when a preceding vehicle is absent within a given distance, the accelerating and decelerating control is performed so that the vehicle speed becomes the target vehicle speed at a predetermined location in the front; when the preceding vehicle is present within a given distance, the following control is performed so that the vehicle travels following the preceding vehicle with a target inter-vehicle distance. Specifically, when each location on the travelling route has been learned, the target vehicle speed becomes the first learning vehicle speed and the accelerating and decelerating control is performed so that the vehicle speed becomes the first learning vehicle speed at the first learning location. Also, besides the accelerating control and the decelerating control, the constant speed control or the like is also performed if necessary, so as to maintain the target vehicle speed.

Specifically, when the accelerating and decelerating control is performed for becoming the first learning vehicle speed (the target vehicle speed) at the first learning location, the accelerating and decelerating control is performed so that the vehicle speed becomes the second learning vehicle speed at the second learning location when a second learning vehicle speed is set by the second learning portion 43; or the accelerating and decelerating control is performed so that the acceleration and deceleration becomes the learning acceleration and deceleration when the learning acceleration and deceleration is set by the second learning portion 43. For example, when the accelerating and decelerating control is performed for becoming the second learning vehicle speed at the second learning location, the accelerating and decelerating control is initially performed for becoming the second learning vehicle speed at the second learning location, the accelerating and decelerating control is performed for becoming the first learning vehicle speed at the first learning location after the vehicle passes through the second learning location. Also, when the decelerating control is performed for becoming the learning deceleration, the decelerating control is performed so that deceleration equivalent to the engine brake is set till a location P3 that intersects with the curve showing the vehicle speed change of the learning deceleration DA as illustrated in FIG. 3, and becomes the learning deceleration after the location P3. Also, when the accelerating control is performed for becoming the learning acceleration, the accelerating control is performed with the acceleration at the beginning of the accelerating control until the location that intersects with the curve showing the vehicle speed change of the learning acceleration, and the accelerating control is performed for becoming the learning acceleration after the location. The accelerating and decelerating control by considering the second learning vehicle speed and the learning acceleration and deceleration is an example; other accelerating and decelerating control may also be performed.

The travel control portion 45 determines whether a preceding vehicle is present within the given distance, based on the information from the radar sensor 12. When the preceding vehicle is present within the given distance, the travel control portion 45 calculates the necessary target acceleration and deceleration for the inter-vehicle, distance from the preceding vehicle to become the target inter-velicle distance, based on the difference between the inter-vehicle distance from the preceding vehicle and the target inter-vehicle distance. When the target acceleration and deceleration is a positive value, the travel control portion 45 sets the target acceleration, and sends the target acceleration to the engine ECU 30 as an engine control signal. When the target acceleration and deceleration is a negative value, the travel control portion 45 sets the target deceleration, and sends the target deceleration to the brake ECU 31 as a brake control signal.

When the preceding vehicle is absent within a given distance and the accelerating and decelerating control is performed for becoming the second learning vehicle speed at the second learning location, the travel control portion 45 first calculates the target acceleration and deceleration necessary for the vehicle speed to become the second learning vehicle speed at the second learning location based on the difference between the current vehicle speed of the vehicle and the second learning vehicle speed. When the target acceleration and deceleration is a positive value, the travel control portion 45 sets the target acceleration and sends the target acceleration to the engine ECU 30 as an engine control signal. When the target acceleration and deceleration is a negative value, the travel control portion 45 sets the target deceleration and sends the target deceleration to the brake ECU 31 as a brake control signal. Then, the travel control portion 45 determines whether the current location of the vehicle becomes the second learning location. When it is determined that the current location of the vehicle becomes the second learning location, the travel control portion 45 calculates the target acceleration and deceleration necessary for the vehicle speed to become the first learning vehicle speed at the first learning location based on the difference between the current vehicle speed of the vehicle and the first learning vehicle speed (the target vehicle speed). When the target acceleration and deceleration is a positive value, the travel control portion 45 sets the target acceleration and sends the target acceleration to the engine ECU 30 as an engine control signal. When the target acceleration and deceleration is a negative value, the travel control portion 45 sets the target deceleration and sends the target deceleration to the brake ECU 31 as a brake control signal.

When a preceding vehicle is absent within a given distance and the decelerating control is performed for becoming the learning deceleration, the travel control portion 45 first sets a curve of the learning deceleration that passes the first learning vehicle speed at the first learning location, compares the current vehicle speed of the vehicle with the vehicle speed at each location on the curve, and ends the travel control until the current vehicle speed becomes a vehicle speed at any location on the curve. After the current vehicle speed of the vehicle becomes a vehicle speed at any location of the curve, the travel control portion 45 sets the learning deceleration as the target deceleration until the current vehicle speed at the first learning location becomes the first learning vehicle speed, and sends the target deceleration to the brake ECU 31 as a brake control signal.

When the preceding vehicle is absent within a given distance and the accelerating control is performed for becoming the learning acceleration, the travel control portion 45 first sets a curve of the learning acceleration that passes the first learning vehicle speed at the first learning location, compares the current vehicle speed of the vehicle with the vehicle speed at each location on the curve, sets the current acceleration of the vehicle as the target acceleration until the current vehicle speed of the vehicle becomes a vehicle speed at any location of the curve, and sends the target acceleration as an engine control signal to the engine ECU 30. After the current vehicle speed of the vehicle becomes a vehicle speed at any location of the curve, the travel control portion 45 sets the learning acceleration as the target acceleration until the current vehicle speed becomes the first learning vehicle speed at the first learning location, and sends the target acceleration to the engine ECU 30 as an engine control signal.

In the case of the example illustrated in FIG. 2, if an intention of decelerating control is presented through the driver's operations, the travel control portion 45 performs control from the location PS where the intention of decelerating control is presented, the driver releases the accelerator pedal. First, if the travel control portion 45 performs decelerating control for becoming the second learning vehicle speed VA2 at the second learning location P2, the deceleration from the starting location PS of the travel control to the second learning location P2 is the deceleration of the vehicle speed change shown by the bold line D1. If the vehicle passes through the second learning location P2, and the travel control portion 45 performs decelerating control so that the vehicle speed becomes the first learning vehicle speed VA1 at the first learning location P1, the deceleration from the second learning location P2 to the first learning location P1 is the deceleration of the vehicle speed change shown by the bold line D2. The deceleration (the vehicle speed change) D1, D2 in each region is close to the vehicle speed change of the vehicle speed data A1, A2, A3, A4 caused by the driver's driving operations. In the case of the example illustrated in FIG. 3, the travel control portion 45 ends the travel control until the location P3 (the location where the curve of the vehicle speed change showing the learning deceleration DA intersects with the curve of the vehicle speed change showing the deceleration caused by the engine brake), thus, the deceleration from the starting location PS of the travel control to the location P3 is the deceleration of the vehicle speed change which is reduced due to the engine brake shown by the bold line D3. If the vehicle passes through the location P3, and the travel control portion 45 performs decelerating control so that the deceleration becomes the learning deceleration DA, then the deceleration from the location P3 to the first learning location P1 corresponds to the learning deceleration of the vehicle speed change shown by the bold line DA. The deceleration (the vehicle speed change) D3, DA in each region is close to the vehicle speed change of the vehicle speed data A1, A2, A3, A4 caused by the driver's driving operations. FIG. 4 illustrates an example in which the driving assistance device of related art performs the travel control; the driving assistance device performs decelerating control so that the vehicle speed becomes the learning vehicle speed VA0 at the learning location P0 from the beginning of the control. Thus, the deceleration from the starting location PS of the travel control to the learning location P0 is the deceleration of the vehicle speed change shown by the bold line D0. The deceleration (the vehicle speed change) D0 is separate from the vehicle speed changes of the vehicle speed data A1, A2, A3, A4 caused by the driver's driving operations, which differs from the driver's preference of deceleration.

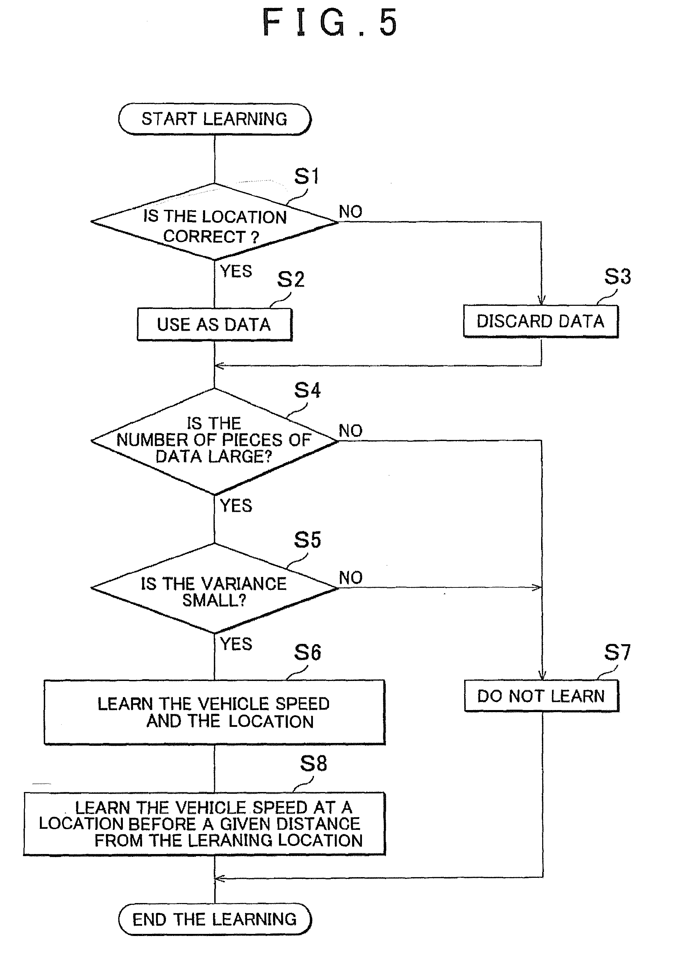

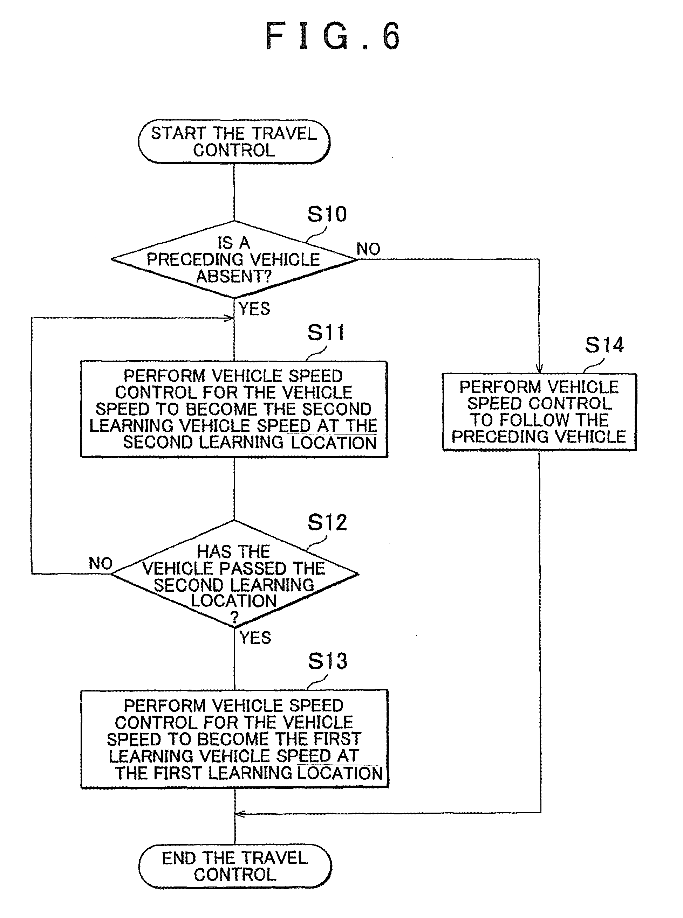

The action of the driving assistance device 1 is described with reference to FIG. 1. Specifically, the actions while learning are described with reference to the flowchart of FIG. 5, and the actions under the travel control are described with reference to the flowchart of FIG. 6. FIG. 5 is a flowchart illustrating the process of the actions while learning of the driving assistance device 1. FIG. 6 is a flowchart illustrating the process of the actions under travel control of the driving assistance device 1. Also, when a vehicle is traveling due to the accelerating and decelerating operations performed by the driver himself/herself, generally the vehicle speed is adjusted to keep a predetermined inter-velucle distance when a preceding vehicle is present within a given distance, and the vehicle speed is adjusted with the acceleration and deceleration preferred by the driver when a preceding vehicle is absent within a given distance. In the description of the actions, a case is described in which the learning is performed at the second learning location before a given distance from the first learning location by the second learning portion 43.

The vehicle speed sensor 10 detects the vehicle speed at a regular interval and sends a vehicle speed signal to the driving assistance ECU 40. The GPS receiver 11 detects the current location of the vehicle based on the GPS signal from the GPS satellites at a regular interval and sends a current location signal to the driving assistance ECU 40. The radar sensor 12 detects the preceding vehicle or the like in front of the vehicle using electromagnetic wave at a regular interval, and sends a radar detection signal to the driving assistance ECU 40. If the driving assistance switch 13 receives any operation input performed by the driver, a switch signal will be sent to the driving assistance ECU 40. If these signals are sent, the driving assistance ECU 40 receives these signals and acquires information from the signals.

The actions while learning are described. During the time when the vehicle is traveling due to the driver's driving operations, the driving assistance ECU 40 determines whether the current location detected by the GPS receiver 11 is the correct location on the route (road) (Step S1). When it is determined in Step S1 that it is the correct location, the driving assistance ECU 40 uses the acquired data such as the vehicle speed, and stores the vehicle speed data or the like associated with the location in the learning database 20 (Step S2). When it is determined in S1 that it is not the correct location, the driving assistance ECU 40 discards the acquired data such as the vehicle speed (Step S3).

The driving assistance ECU 40 determines whether the number of pieces of data relating to the current location stored in the learning database 20 is large (whether the number of travel times is a given number or above) (Step S4). When it is determined in Step S4 that the number of pieces of data is small, the driving assistance ECU 40 does not perform learning regarding the location (Step S7).

When it is determined in Step S4 that the number of pieces of data is large, the driving assistance ECU 40 calculates the variance of all the vehicle speed data relating to the current location stored in the learning database 20, and determines whether the variance is smaller than the threshold value (Step S5). When it is determined in Step S5 that the variance is a threshold value or above, the driving assistance ECU 40 does not perform learning regarding the location (Step S7).

When it is determined in Step S5 that the variance is smaller than the threshold value, the driving assistance ECU 40 sets a first learning vehicle speed (the target vehicle speed) using a plurality of vehicle speed data relating to the current location (corresponding to the first learning location) stored in the learning database 20, and stores the first learning vehicle speed associated with the first learning location in the learning database 20 (Step S6). In addition, the driving assistance ECU 40 sets a second learning vehicle speed using a plurality of vehicle speed data relating to the location (corresponding to the second learning location) before a given distance from the first learning location stored in the learning database 20, and stores the second learning vehicle speed and the second learning location associated with the first learning location in the learning database 20 (Step S8).

The actions of the HMI are described. During the vehicle is travelling, every time when the current location of the vehicle is acquired, the driving assistance ECU 40 extracts the second learning vehicle speed, the second learning location, the first learning location and the first learning vehicle speed (the target vehicle speed) of a location within a predetermined range from the current location on the current travelling route (road) of the vehicle from the learning database 20. When the first learning vehicle speed is absent, the set target vehicle speed such as the speed limit on the current travelling road is used. Then, the driving assistance ECU 40 uses the target vehicle speed or the like to generate the image information for the display of the HMI, and sends the display control signal to the display 32. If the display control signal is received, the display 32 displays the image of the display control signal. Also, the driving assistance ECU 40 uses the target vehicle speed or the like to generate the sound information for outputting of the HMI in sound, and sends the sound control signal to the speaker 33. If the sound control signal is received, the speaker 33 outputs the sound of the sound control signal. The driver receives the information provided by the image displayed on the display 32 and the sound output from the speaker 33, and performs operations to start any one of the accelerating control or the decelerating control using the driving assistance switch 13 or the like, when the driver has the intention to perform the accelerating control or the decelerating control by the driving assistance device 1.

The actions of the travel control are described. When the driver presents the intention of the accelerating control or the decelerating control using the driving assistance switch 13, the driving assistance ECU 40 determines whether the preceding vehicle is present within a given distance based on the information from the radar sensor 12 (Step S10), when the preceding vehicle is present within the given distance (when the result of the determination in Step S10 is NO), the target acceleration and deceleration for becoming the target inter-velicle distance is calculated based on the difference between the inter-vehicle distance from the preceding vehicle and the target inter-vehicle distance (Step S 14). Then, when the target acceleration and deceleration is a positive value, the driving assistance ECU 40 sets target acceleration and sends an engine control signal to the engine ECU 30; and when the target acceleration and deceleration is a negative value, the driving assistance ECU 40 sets target deceleration and sends a brake control signal to the brake ECU 31 (Step S14). If the engine control signal is received, the engine ECU 30 performs engine control for becoming the target acceleration shown by the engine control signal (Step S14). If the brake control signal is received, the brake ECU 31 performs brake control for becoming the target deceleration shown by the brake control signal (Step S14). By using each control, the vehicle travels following the preceding vehicle with an inter-vehicle distance at the degree of the target inter-vehicle distance.

When a preceding vehicle is absent within a given distance (when the result of the determination in Step S10 is YES), the driving assistance ECU 40 first calculates the target acceleration and deceleration necessary for the vehicle speed to become the second learning vehicle speed at the second learning location, based on the difference between the current vehicle speed of the vehicle and the second learning vehicle speed (Step S11). When the target acceleration and deceleration is a positive value, the driving assistance ECU 40 sets target acceleration and sends an engine control signal to the engine ECU 30 (Step S11). When the target acceleration and deceleration is a negative value, the driving assistance ECU 40 sets target deceleration and sends a brake control signal to the brake ECU 31 (Step S11). If each control signal is received, the engine ECU 30 and the brake ECU 31 perform the same control as described above (Step S11). By using each control, the vehicle speed of the vehicle at the second learning location becomes the second learning vehicle speed. The driving assistance ECU 40 determines whether the current location of the vehicle has passed the second learning location (Step S12). When it is determined that the vehicle has passed the second learning location (when the result of the determination in Step S12 is YES), the driving assistance ECU 40 calculates the target acceleration and deceleration necessary for the vehicle speed to become the first learning vehicle speed at the first learning location based on the difference between the current vehicle speed of the vehicle and the first learning vehicle speed (the target vehicle speed) (Step S 13). When the target acceleration and deceleration is a positive value, the driving assistance ECU 40 sets the target acceleration and sends an engine control signal to the engine ECU 30 (Step S13). When the target acceleration and deceleration is a negative value, the driving assistance ECU 40 sets the target deceleration and sends a brake control signal to the brake ECU 31 (Step S 13). If the control signal is received, the engine ECU 30 and the brake ECU 31 perform the same control as described above. By using each control, the vehicle speed of the vehicle at the first learning location becomes the first learning vehicle speed.

Thus, the driving assistance device 1 acquires the vehicle speed when the vehicle is traveling due to the driver's accelerating and decelerating operations and stores the vehicle speed at each location on the travel route in the learning database 20 for multiple times. Then, the driving assistance device 1 obtains respectively the variance of a plurality of vehicle speeds concerning each location stored in the learning database 20; and learns the first learning vehicle speed of the location by the first learning portion 42 based on a plurality of vehicle speeds concerning a location where the variance is less than a threshold value when the location is present. When the variance of the plurality of vehicle speeds stored concerning the location is large, reliability of the vehicle speed data is low in learning, thus, the learning is not performed. On the other hand, when the variance of the plurality of vehicle speeds stored concerning the location is less than the threshold value, the vehicle speeds caused by the driver's accelerating and decelerating operations at the location are stable, reliability of the vehicle speed data is high in learning, thus, the learning is performed. The threshold value is a value used for determining that the variance (the dispersion of the vehicle speeds) of the vehicle speeds for multiple travel times caused by the driver's accelerating and decelerating operations is small. The driving assistance device 1 learns the second learning vehicle speed or the learning acceleration and deceleration by the second learning portion 43 at a location within a set range before the location learned by the first learning portion 42. In the learning, one location within the set range may be learned, or a plurality of locations within the set range may be learned. Therefore, there is at least one location learned by the second learning portion 43 is present before the location learned by the first learning portion 42, the travel control can be performed by using the second learning vehicle speed or the learning acceleration and deceleration at the location before the location learned by the second learning portion 43 when the travel control is performed so that the vehicle speed becomes the first learning vehicle speed at the location learned by the first learning portion 42. The set range is a range set before the location learned by the first learning portion 42 when the second learning portion 43 is learning, which is maximally till the previous location learned by the first learning portion 42.

The driving assistance device 1 performs the travel control by considering the second learning vehicle speed or the learning acceleration and deceleration at the location learned by the second learning portion 43, when the travel control is performed by the travel control portion 45, so that the vehicle speed becomes the first learning vehicle speed at the location learned by the first learning portion 42. When the travel control is performed so that the vehicle speed becomes the first learning vehicle speed at a location where the variance of the vehicle speeds caused by the driver's accelerating and decelerating operations is a threshold value or below, the second learning vehicle speed or the learning acceleration and deceleration at a location within the set range before the location is used, thus, the second learning vehicle speed or the learning acceleration and deceleration at the location within the set range is also learned from the vehicle speed or the acceleration and deceleration caused by the driver's accelerating and decelerating operations; therefore, the acceleration and deceleration caused by the travel control is closer to the acceleration and deceleration caused by the driver's accelerating and decelerating operations. Thus, the driving assistance device 1 also learns the second learning vehicle speed or the learning acceleration and deceleration at the location within the set range before the location learned by the first learning portion 42, and performs the travel control by considering the second learning vehicle speed or the learning acceleration and deceleration at the location within the set range, so that comparing with a case in which all the locations on the travel route are learned, the amount of vehicle speed data to be learned can be suppressed. Therefore, the driving assistance device 1 can suppress the amount of the vehicle speed data to be learned, and reduce the uncomfortable feeling brought to the driver by the travel control based on the vehicle speed, which is learned by using the vehicle speed data.

The driving assistance device 1 learns at the second learning location which is before a given distance from the first learning location learned by the first learning portion 42, thus, the process such as calculating the dispersion and comparing for determining the second learning location is not necessary, and the process load can be reduced. Also, the driving assistance device 1 learns at a location with a small less dispersion of a plurality of vehicle speeds before the first learning location learned by the first learning portion 42, thus, the vehicle speeds caused by the driver's accelerating and decelerating operations are stable when the dispersion of the vehicle speeds is small; therefore a learning vehicle speed based on data of high reliability after learning the second learning vehicle speed can be acquired. The driving assistance device 1 also learns the acceleration and deceleration at a location before the first learning location learned by the first learning portion 42, thus, the learning acceleration and deceleration can be directly used to perform the accelerating and decelerating control.

The embodiments of the present disclosure are described above, however, the present disclosure is not limited to the above embodiments, and may be embodied in various forms.

For example, the present embodiment is applied to a driving assistance device that learns the vehicle speed, and performs travel control and provides information using the learned vehicle speed, but it may also be applied to a driving assistance device that only performs the travel control. Also, the present embodiment is configured that the driving operations of the driver are prioritized, and the travel control is performed only when instructed by the driver; but it may also be configured that the travel control is performed constantly if being instructed by the driver at the beginning of the driving (automatic drive etc.). Also, the present embodiment is configured that the instruction is sent from the driving assistance ECU to the engine ECU and the brake ECU to perform travel control with multiple ECUs, however, it may also be configured that the driving assistance ECU controls each actuator of the engine and the brake directly to perform travel control with one ECU. Also, the present embodiment uses an engine as the driving source of the vehicle, however, other driving sources such as a motor, or a hybrid source of motor and engine etc. may also be used. Also, the present embodiment uses a hydraulic brake, but other brakes such as a brake-by-wire may be used. Also, the present embodiment uses image displayed on the display and the sound output of the speaker as information provision; but the information may be provided by either one of the display and the sound output or other information provision methods.

Also, in the embodiment, the vehicle speed or the acceleration and deceleration is learned by the second learning portion at one location before the first learning location learned by the first learning portion; however, the vehicle speed or the acceleration and deceleration may also be learned respectively at each of the two or more locations before the first learning location, and the travel control is performed by considering the learning vehicle speed or the learning acceleration and deceleration at each of the plurality of locations before the first learning location. The travel control is performed by using the plurality of vehicle speeds or acceleration and deceleration learned at each of the plurality of locations before the first learning location, thus accelerating and decelerating that suits the driver's preference more can be performed.

Also, in the present embodiment, as a method for determining whether the dispersion of a plurality of vehicle speeds is less than the threshold, a determination method is described in which whether the variance value of the vehicle speeds is the threshold or below is determined; however, other methods can also be applied as methods for determining the dispersion, for example, the predetermined vehicle speed range is set as a threshold, it is determined that the dispersion is less than the threshold when a plurality of vehicle speeds enter the predetermined vehicle speed range. Various determination methods can also be applied to determine the dispersion of the acceleration and deceleration.

## Claims

1. A driving assistance device that learns travel data during a time in which a driver performs driving operations to make a vehicle travel, and performs driving assistance based on a learned result, **characterized by** comprising:
a storage portion (20, 41) that stores vehicle speeds in relation to each location on a travel route for multiple times by using a vehicle speed acquired when the driver performs accelerating and decelerating operations to make the vehicle travel;
a first learning portion (42) that learns a first learning vehicle speed at a location where a dispersion of a plurality of vehicle speeds is less than a threshold value based on the plurality of vehicle speeds at the location, when the location where the dispersion of the plurality of vehicle speeds is less than a threshold value exists among locations stored in the storage portion (20, 41);
a second learning portion (43) that learns a second learning vehicle speed or a learning acceleration and deceleration at a location within a set range before the location learned by the first learning portion (42) stored in the storage portion (20, 41) based on a plurality of vehicle speeds at the location within the set range or a plurality of accelerations and decelerations acquired respectively from changes of the plurality of vehicle speeds;
a location acquisition portion (11) that acquires a current location of the vehicle; and
a travel control portion (30, 31, 45) that performs travel control based on the current location of the vehicle acquired by the location acquisition portion (11), the first learning vehicle speed, and one of the second learning vehicle speed and the learning acceleration and deceleration.

2. The driving assistance device according to claim 1, wherein the second learning portion (43) learns the second learning vehicle speed or the learning acceleration and deceleration at a location in a given distance before the location learned by the first learning portion (42).

3. The driving assistance device according to claim 1, wherein the second learning portion (43) learns the second learning vehicle speed or the learning acceleration and deceleration at a location having a minimum dispersion of the plurality of vehicle speeds or the plurality of accelerations and decelerations within the set range.

4. The driving assistance device according to any one of claims 1 to 3, wherein a maximal range of the set range is shorter than a range till a previous learning location learned by the first learning portion (42) last time.
